# EUROPEAN PATENT APPLICATION

(11) **EP 4 674 754 A1**
(43) Date of publication of application: **07.01.2026**
(21) Application number: 23925186.1
(22) Date of filing: 27.02.2023
(51) Int. Cl.: B64D 1/22, B64C 39/02, B64U 10/13, B64U 101/28

(54) **MOBILE WORK APPARATUS AND WORK METHOD USING MOBILE WORK APPARATUS**

(71) Applicant: Irobotics, Inc., Tokyo 102-0085 (JP)
(72) Inventor: YAMAGUCHI, Takashi, Tokyo 100-0005 (JP); HAGIWARA, Naokazu, Tokyo 100-0005 (JP); MINATOGAWA, Ryo, Tokyo 100-8071 (JP); ISHII, Kazutoshi, Tokyo 100-8071 (JP); ANDO, Yoshiyasu, Tokyo 150-0043 (JP); KAJITANI, Kenichi, Tokyo 150-0043 (JP); MIYAGAWA, Yutaka, Tokyo 150-0043 (JP); NOGUCHI, Katsuya, Tokyo 150-0043 (JP)
(74) Representative: Vossius & Partner Patentanwälte Rechtsanwälte mbB
(86) International application number: PCT/JP2023/007129
(87) International publication number: WO 2024/180628

(57) **Abstract**

In a suspension-type mobile work apparatus suspended from a flying device, a work unit is capable of stably moving along a target surface with high positional accuracy. There is provided a mobile work apparatus, including: a flying device; a suspension portion attached to the flying device; a body suspended from the flying device using the suspension portion; a work unit attached to the body; and a unit that is attached to the flying device, the body, or the suspension portion and that adjusts a length of the suspension portion.

## Description

### TECHNICAL FIELD

The present invention relates to a mobile work apparatus and a work method using the mobile work apparatus.

### BACKGROUND ART

When walls or the like of buildings and other structures are painted, the painting process is typically performed by hand by workers standing on scaffolding. However, especially when the surface to be painted is at high altitude, the amount of work required to assemble and dismantle the scaffolding is enormous, and often exceeds the amount of work required for the painting itself. Patent Literature 1 thus proposes an apparatus in which a spray nozzle is attached to an unmanned aerial vehicle (UAV) and painting is performed while flying the UAV along a wall surface. Patent Literature 2 proposes a work apparatus including a support body suspended from a UAV using a wire or the like, and a work unit supported by the support body. Utilizing these techniques eliminates the assembly and dismantling of scaffolding in the painting process for wall surfaces at high altitude, resulting in an efficient painting process at low cost.

### CITATION LIST

### PATENT LITERATURE(S)

Patent Literature 1: US Patent Application Publication No. 2019/0127064
Patent Literature 2: Japanese Utility Model Registration No. 3225084 U

### SUMMARY OF THE INVENTION

### PROBLEM(S) TO BE SOLVED BY THE INVENTION

However, in order to move a flying device such as a UAV along a target surface with high positional accuracy, advanced control techniques are required, and the position of the flying device may be unstable due to factors such as wind. This may cause, for example, significant variation in distance between the spray nozzle and the target surface when a coating solution is sprayed in the painting process and a non-constant moving speed of the spray nozzle along the target surface, resulting in an uneven coating film.

Therefore, an object of the invention is to provide a suspension-type mobile work apparatus that is suspended from a flying device and is capable of stably moving a work unit along a target surface with high positional accuracy, and a work method using the mobile work apparatus.

### MEANS FOR SOLVING THE PROBLEM(S)

According to an aspect of the invention, there is provided a mobile work apparatus, including: a flying device; a suspension portion attached to the flying device; a body suspended from the flying device using the suspension portion; a work unit attached to the body; and a unit configured to adjust a length of the suspension portion, the unit being attached to the flying device, the body, or the suspension portion.

In the above mobile work apparatus, the suspension portion may include a wire, and the unit configured to adjust the length of the suspension portion may include a winding device configured to wind and unwind the wire. In this configuration, the suspension portion may include at least two wires attached to the body at different positions, and the unit configured to adjust the length of the suspension portion may include at least two winding devices configured to synchronously wind or unwind the at least two wires. Or, the suspension portion may include a swivel and a wire attached to the body through the swivel.

In the above mobile work apparatus, the work unit may include a plurality of spray nozzles from which fluid is sprayed to a target surface. In this configuration, the plurality of spray nozzles may be arranged in a horizontal direction, and the work unit may further include a unit configured to adjust a direction within a horizontal plane in which the fluid is sprayed from each of the spray nozzles. Or, the work unit further may include a unit configured to adjust a direction within a vertical plane in which the fluid is sprayed from each of the spray nozzles.

According to another aspect of the invention, there is provided a work method using a mobile work apparatus, the method including: causing a flying device to hover in a vicinity of a target surface; moving a body of the mobile work apparatus suspended from the flying device using a suspension portion in a vertical direction along the target surface by adjusting a length of the suspension portion, while continuing to hover the flying device; performing a work on the target surface using a work unit attached to the body in parallel with or alternating with the movement of the body in the vertical direction; and moving the flying device along the target surface in a horizontal direction and causing the flying device to hover again.

According to the above configurations, the suspension-type mobile work apparatus suspended from the flying device, which includes the unit configured to adjust the length of the suspension portion between the flying device and the body, can stably move the work unit with high positional accuracy along the target surface without requiring advanced operation techniques for the flying device.

### BRIEF DESCRIPTION OF DRAWINGS

Fig. 1 illustrates a mobile work apparatus according to a first exemplary embodiment of the invention.
Fig. 2 illustrates a mobile work apparatus according to a second exemplary embodiment of the invention.
Fig. 3 illustrates a mobile work apparatus according to a third exemplary embodiment of the invention.
Fig. 4 illustrates a mobile work apparatus according to a fourth exemplary embodiment of the invention.
Fig. 5 is a cross-sectional view taken along a line V-V in Fig. 4.
Fig. 6 illustrates a mobile work apparatus according to a fifth exemplary embodiment of the invention.
Fig. 7 illustrates a modified example of the mobile work apparatus according to the exemplary embodiment of the invention.
Fig. 8 illustrates another modified example of the mobile work apparatus according to the exemplary embodiment of the invention.
Fig. 9 illustrates an exemplary arrangement of spray nozzles applicable to the exemplary embodiment(s) of the invention, and corresponds to a cross-sectional view taken along a line VI-VI in Fig. 1.
Fig. 10A illustrates another exemplary arrangement of spray nozzles applicable to the exemplary embodiment(s) of the invention.
Fig. 10B illustrates still another exemplary arrangement of spray nozzles applicable to the exemplary embodiment(s) of the invention.
Fig. 11 illustrates an example in which a unit for adjusting the length of a suspension portion is omitted from the fourth exemplary embodiment.
Fig. 12 illustrates an example in which the unit for adjusting the length of the suspension portion is omitted from the fifth exemplary embodiment.
Fig. 13 illustrates a modified example of the example described with reference to Fig 11.

### DESCRIPTION OF EMBODIMENT(S)

Referring to the accompanying drawings, preferred exemplary embodiments of the invention will be described in detail below. In this description and the drawings, components that have substantially the same functional configuration are indicated by the same reference numerals, and redundant description thereof is omitted.

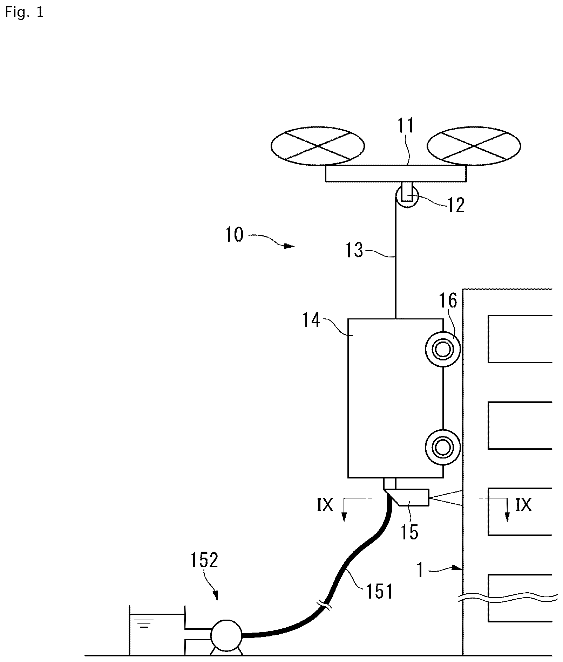

Fig. 1 illustrates a mobile work apparatus according to a first exemplary embodiment of the invention. In the exemplary embodiment, a mobile work apparatus 10 includes a flying device 11, a winch 12 attached to the flying device 11, a wire 13 attached to the flying device 11 through the winch 12, a body 14 suspended from the flying device 11 using the wire 13, a spray nozzle 15 attached to the body 14, and wheels 16. In the mobile work apparatus 10, the winch 12 is a winding device capable of winding and unwinding the wire 13. The winch 12 configures a unit for adjusting the length of a suspension portion configured by the wire 13. The type of the flying device 11 is not particularly limited, but may be, for example, an unmanned aerial vehicle (UAV) controlled by remote control or autonomous driving. Although the body 14 is illustrated as being box-shaped, the shape of the body 14 is not particularly limited, and may be, for example, a frame to which the wire 13 and the spray nozzle 15 are fixed.

Fluid is sprayed from the spray nozzle 15 to a target surface. In the exemplary embodiment, a target surface 1 is a wall surface of a structure, and a coating solution containing a coating material is sprayed from the spray nozzle 15 to the target surface 1. For example, the coating solution is supplied, through a supply tube 151, from a supply device 152 including a pump or the like disposed on the ground, as illustrated in the drawings. In another example, the supply tube 151 may be omitted and the coating solution may be supplied from a supply device mounted on the body 14.

The wheels 16 are attached to the body 14 on a side close to the target surface 1. The wheels 16 come into contact with the target surface 1 when the body 14 approaches the target surface 1. The body 14 can move in a vertical direction with the wheels 16 brought in contact with the target surface 1. The wheels 16 arranged as described above stabilizes a positional relationship between the body 14 and the target surface 1, making it possible to stably spray the coating solution from the spray nozzle 15.

In a painting process using the mobile work apparatus 10 configured as described above, the winch 12 winds the wire 13 while the flying device 11 is kept hovering near the target surface 1, thereby moving the body 14 and the spray nozzle 15 upward along the target surface 1. Similarly, the body 14 and the spray nozzle 15 can move downward along the target surface 1 by causing the winch 12 to unwind the wire 13. Therefore, in a state where the flying device 11 is kept hovering, the coating solution is sprayed from the spray nozzle 15 to the target surface 1 in parallel with or alternately with the vertical movement of the body 14, thereby painting a vertically extending belt-shaped area of the target surface 1. When the flying device 11 is moved in a horizontal direction along the target surface 1, the body 14 and the spray nozzle 15 also move in the horizontal direction, making it possible to paint, for example, a lateral belt-shaped area of the target surface 1. By repeating the above, the target surface 1 can be painted over a large range.

In the exemplary embodiment, by winding and unwinding the wire 13 using the winch 12 attached to the flying device 11, the body 14 and the spray nozzle 15 can be moved in the vertical direction with high positional accuracy while the flying device11 is kept hovering, specifically, for example, can be moved at a constant speed. The operation of making the flying device 11 hover is easier than, for example, the operation of moving the flying device 11 at a constant speed. Furthermore, it is easier to control the amount of the wire 13 wound or unwound by the winch 12 with high accuracy than to control the position of the flying device 11. Therefore, in the exemplary embodiment, the body 14 and the spray nozzle 15 of the mobile work apparatus 10 can be moved along the target surface 1 with high positional accuracy without requiring advanced operation techniques for the flying device 11. This makes it possible, for example, to move the body 14 and the spray nozzle 15 at a constant speed to produce a uniform coating film on the target surface 1.

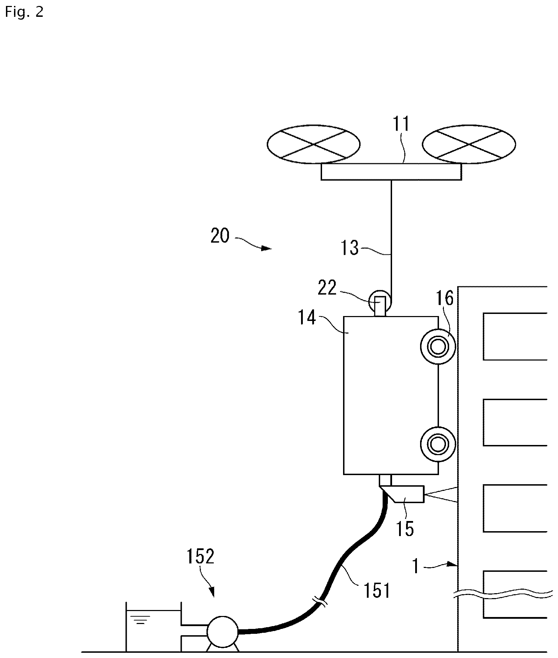

Fig. 2 illustrates a mobile work apparatus according to a second exemplary embodiment of the invention. In the illustrated example, a mobile work apparatus 20 includes a winch 22 that is attached to the body 14 rather than to the flying device. Also in this case, winding and unwinding the wire 13 using the winch 22 makes it possible to move the body 14 and the spray nozzle 15 in the vertical direction while the flying device 11 is kept hovering, similar to the example in Fig. 1. Any other configurations of the mobile work apparatus 20 are similar to those of the mobile work apparatus 10 in the example of Fig. 1 above.

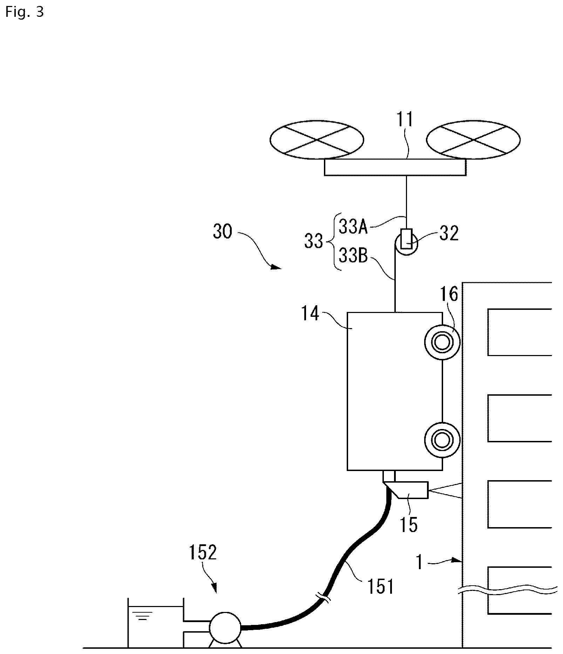

Fig. 3 illustrates a mobile work apparatus according to a third exemplary embodiment of the invention. In the illustrated example, a mobile work apparatus 30 includes a wire 33 that suspends the body 14 from the flying device 11. The wire 33 is divided into an upper wire 33A and a lower wire 33B. An upper end of the upper wire 33A is attached to the flying device 11, and a lower end of the upper wire 33A is attached to a winding device 32. The winding device 32 is capable of winding and unwinding the lower wire 33B. The body 14 is attached to a lower end of the lower wire 33B. That is, in the exemplary embodiment, the winding device 32 is attached to a middle part of the wire 33 configuring the suspension portion. Also in this case, winding and unwinding the lower wire 33B using the winding device 32 makes it possible to move the body 14 and the spray nozzle 15 in the vertical direction while the flying device 11 is kept hovering, similar to the example in Fig. 1. Any other configurations of the mobile work apparatus 30 are similar to those of the mobile work apparatus 10 in the example of Fig. 1 above.

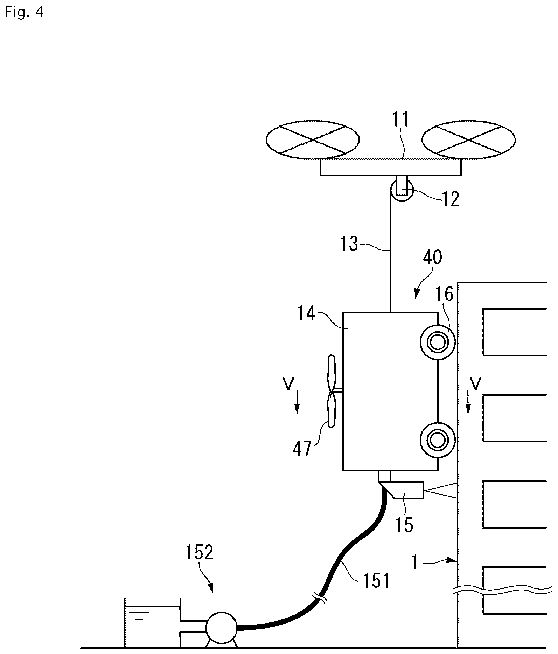

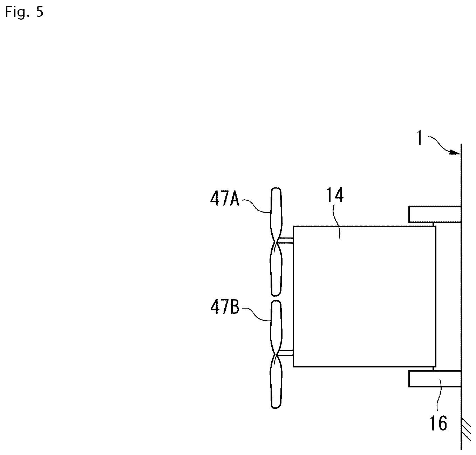

Fig. 4 illustrates a mobile work apparatus according to a fourth exemplary embodiment of the invention. Fig. 5 is a cross-sectional view taken along a line V-V in Fig. 4. In the exemplary embodiment, a mobile work apparatus 40 includes the flying device 11, the winch 12, the wire 13, the body 14, the spray nozzle 15, the wheels 16, and a fan 47. The configurations of the mobile work apparatus 40 other than the fan 47 described below are similar to those of the first exemplary embodiment, so duplicated detailed description will be omitted.

The fan 47 generates an airflow in an opposite direction to the spraying of the coating solution from the spray nozzle 15. That is, in the illustrated example, the airflow generated by the fan 47 in an opposite direction to the target surface 1 generates a thrust force in a direction in which the body 14 approaches the target surface 1. The number, size, and mounting position of the fans 47 are not particularly limited. For example, as illustrated in Fig. 5, a plurality of fans 47 may be arranged symmetrically in the horizontal direction on a side of the body 14 opposite to the target surface 1. In the example of Fig. 5, two fans 47A and 47B are arranged symmetrically in the horizontal direction. By arranging the fans 47 symmetrically in the horizontal direction as described above, the thrust force acting on the body 14 by the airflow generated by the fans 47 is made uniform in the horizontal direction. This makes it possible to prevent the body 14 from rotating in a horizontal plane direction and allows the spray nozzle 15 to stably face the target surface 1. In another example, three or more fans 47 may be arranged symmetrically in the horizontal direction. In such an arrangement of the fans 47, if the rotation speed of each fan 47 can be controlled individually, it is possible to actively inhibit the rotation of the body 14 caused by the effect of wind, for example. In the exemplary embodiment, the wheels 16 are similar in configuration to those of the first exemplary embodiment. Bringing the wheels 16 into contact with the target surface 1 makes it easier to control the fan(s) 47, because the thrust force generated by fan(s) 47 needs not be fine-tuned to prevent the body 14 from colliding with the target surface 1.

In the exemplary embodiment, the airflow generated by the fan(s) 47 generates the thrust force in the direction in which the body 14 approaches the target surface 1. Therefore, when the coating solution is sprayed from the spray nozzle 15 to the target surface 1, the body 14 is prevented from moving away from the target surface 1 that may otherwise be caused by reaction force against the spraying. Therefore, in the exemplary embodiment, the body 14 and the spray nozzle 15 of the mobile work apparatus 40 can be moved along the target surface 1 with high positional accuracy without requiring advanced operation techniques for the flying device 11, and the body 14 is prevented from moving away from the target surface 1, thereby producing a uniform coating film.

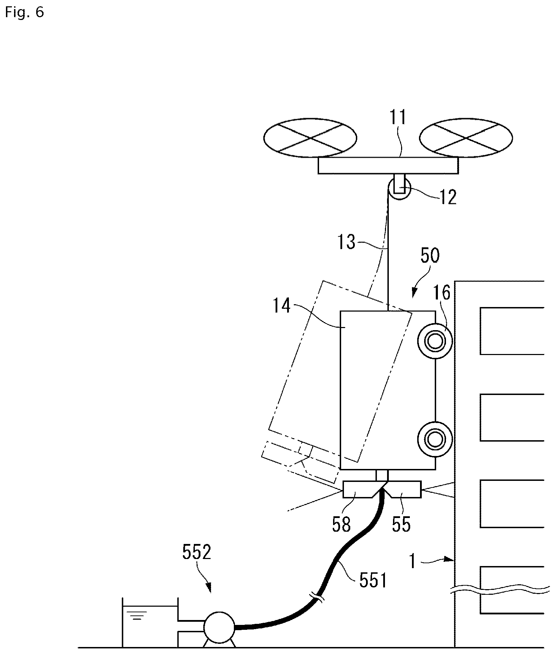

Fig. 6 illustrates a mobile work apparatus according to a fifth exemplary embodiment of the invention. In the exemplary embodiment, a mobile work apparatus 50 includes the flying device 11, the winch 12, the wire 13, the body 14, a spray nozzle 55, the wheels 16, and an injection nozzle 58. The configurations of the mobile work apparatus 50 other than the spray nozzle 55 and the injection nozzle 58 described below are similar to those of the first exemplary embodiment, so duplicated detailed description will be omitted.

The spray nozzle 55 differs from the spray nozzle in the above-described exemplary embodiments. From the spray nozzle 55, high-pressure water is sprayed to the target surface 1 for surface preparation to remove dirt, rust, and the like before painting. In this case, the water may include an abrasive such as silica sand as necessary. For example, the high-pressure water to be sprayed is supplied, through a supply tube 551, from a supply device 552 including a pump or the like disposed on the ground, as illustrated in Fig. 6. The winch 12 winds or unwinds the wire 13 while the flying device 11 is kept hovering near the target surface 1, thereby moving the body 14 and the spray nozzle 55 upward or downward along the target surface 1. It is thus possible to perform the surface preparation before painting over a wide area of the target surface 1.

On the other hand, a fluid is injected from the injection nozzle 58 in an opposite direction to the spraying of the high-pressure water from the spray nozzle 55. That is, in the illustrated example, the fluid injected in the opposite direction to the target surface 1 generates a thrust force in the direction in which the body 14 approaches the target surface 1. The fluid injected from the injection nozzle 58 is not particularly limited, but for example, the same water as that sprayed from the spray nozzle 55 may be injected at the same pressure. In this case, since the water injected from the injection nozzle 58 is not required to include an abrasive, a device for mixing an abrasive only in the water to be supplied to the spray nozzle 55 may be attached to the body 14. In the exemplary embodiment, the wheels 16 are similar in configuration to those of the first exemplary embodiment. Bringing the wheels 16 into contact with the target surface 1 simplifies the configuration of the injection nozzle 58, because the thrust force generated by the injection nozzle 58 needs not be fine-tuned to prevent the body 14 from colliding with the target surface 1.

In the exemplary embodiment, the injection of fluid from the injection nozzle 58 generates the thrust force in the direction in which the body 14 approaches the target surface 1. Therefore, when the high-pressure water is sprayed from the spray nozzle 55 to the target surface 1, the body 14 is prevented from moving away from the target surface 1 that may otherwise be caused by the reaction force against the spraying, as illustrated by an imaginary line in Fig. 6. Therefore, in the exemplary embodiment, the body 14 and the spray nozzle 55 of the mobile work apparatus 50 can be moved along the target surface 1 with high positional accuracy without requiring advanced operation techniques for the flying device 11, and the body 14 is prevented from moving away from the target surface 1, thereby stably performing the surface preparation before painting.

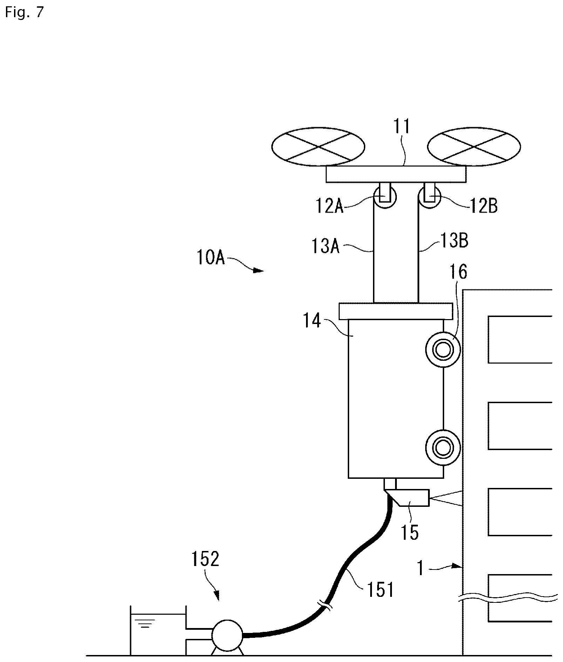

Fig. 7 illustrates a modified example of the mobile work apparatus according to the exemplary embodiment of the invention. In the illustrated example, a mobile work apparatus 10A includes two wires 13A and 13B. The wires 13A and 13B are attached to the flying device 11 at different positions through winches 12A and 12B respectively, and are also attached to the body 14 at different positions. Suspending the body 14 with two or more wires can inhibit swing and rotation of the body 14 in the horizontal direction. The winches 12A and 12B wind and unwind the wires 13A and 13B in synchronization with each other, so that the body 14 and the spray nozzle 15 can be moved in the vertical direction while the flying device 11 is kept hovering, similar to the exemplary embodiments described above. In another example, there may be provided three or more wires and winding devices that wind and unwind those wires in synchronization with one another. Any other configurations of the mobile work apparatus 10A are similar to those of the mobile work apparatus 10 according to the first exemplary embodiment. The configurations as in this modified example can be applied to the mobile work apparatuses 20, 30, 40, and 50 according to the second to fifth exemplary embodiments.

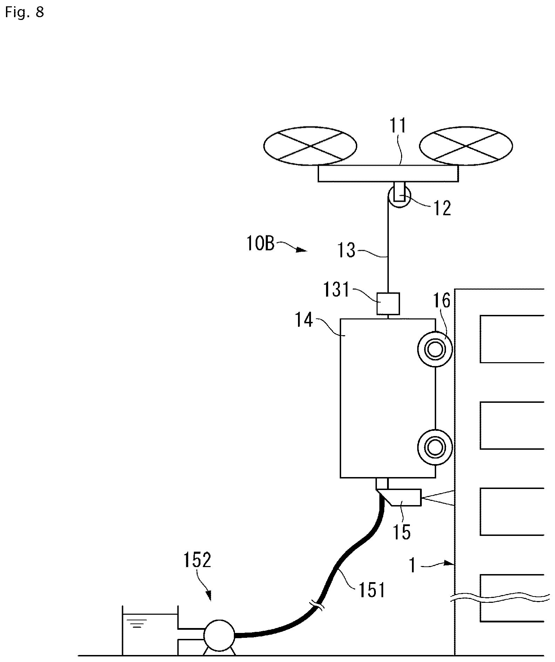

Fig. 8 illustrates another modified example of the mobile work apparatus according to the exemplary embodiment of the invention. In the illustrated example, a mobile work apparatus 10B includes a suspension portion provided with the wire 13 and a swivel 131. The wire 13 is attached to the body 14 through the swivel 131. Attaching the body 14 to the wire 13 through the swivel 131 prevents the twisting of the wire 13 that may otherwise easily occur when suspending the body 14 using the single wire 13 and prevents its restoring force from being transmitted to the body 14, thereby inhibiting rotation of the body 14 in the horizontal direction. Any other configurations of the mobile work apparatus 10B are similar to those of the mobile work apparatus 10 according to the first exemplary embodiment. The configurations as in this modified example can be applied to the mobile work apparatuses 20, 30, 40, and 50 according to the second to fifth exemplary embodiments.

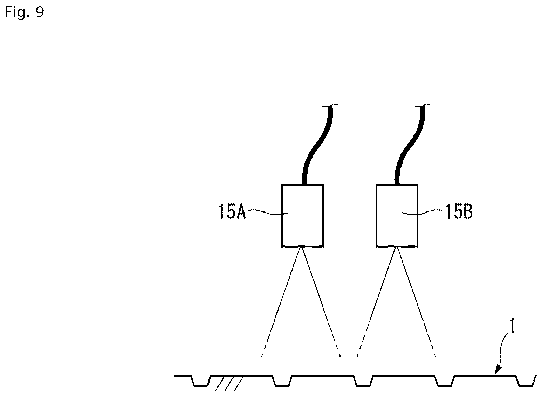

Fig. 9 illustrates an exemplary arrangement of spray nozzles applicable to the exemplary embodiment(s) of the invention, and corresponds to a cross-sectional view taken along a line IX-IX in Fig. 1. In the illustrated example, two spray nozzles 15A and 15B from which the coating solution is sprayed to the target surface 1 are arranged in the horizontal direction. Arranging a plurality of spray nozzles in the horizontal direction as described above makes it possible to spray the coating solution to the entire target surface 1, even when the target surface 1 includes, for example, protrusions and recesses as in the illustrated example. That is, the coating solution can be sprayed to the entire target surface 1 including rising parts of the protrusions and recesses without changing the positions of the spray nozzles 15A and 15B. In another example, three or more spray nozzles may be provided.

In the above exemplary embodiment(s) of the invention, the coating solution is sprayed to the target surface while the body 14 and the spray nozzle 15 are moved in the vertical direction with the flying device 11 being hovered. Thus, spraying the coating solution to the entire target surface 1 including the protrusions and recesses without changing the positions of the spray nozzles 15A and 15B as illustrated in Fig. 9 eliminates the need for a process such as fine-tuning the position of the flying device 11 to paint unpainted areas of the target surface such as the rising parts of the protrusions and recesses. Accordingly, it is possible to reduce the number of movements in the horizontal direction of the flying device 11 and to perform the painting efficiently.

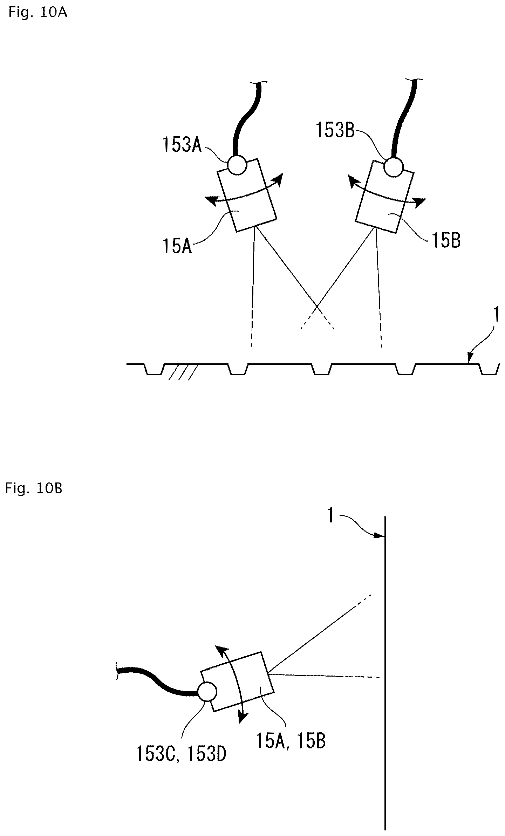

Figs. 10A and 10B illustrate other exemplary arrangements of spray nozzles applicable to the exemplary embodiment(s) of the invention. In the example illustrated in Fig. 10A, in addition to the two spray nozzles 15A and 15B from which fluid is sprayed to the target surface 1, angle adjustment mechanisms 153A and 153B are provided to adjust a direction within a horizontal plane in which the fluid is sprayed from each of the spray nozzles 15A and 15B. For example, changing the spraying direction of each of the spray nozzles 15A and 15B according to the protrusions and recesses of the target surface 1 using the corresponding one of angle adjustment mechanisms 153A and 153B results in a uniform coating film on the target surface 1 in the horizontal direction within a sprayable range of each of the spray nozzles 15A and 15B. Similarly, in the example of Fig. 10B, angle adjustment mechanisms 153C and 153D are provided to adjust a direction within a vertical plane in which the fluid is sprayed from each of the spray nozzles 15A and 15B. Furthermore, the spray nozzles 15A and 15B may be arranged not only in the horizontal direction but also in the vertical direction.

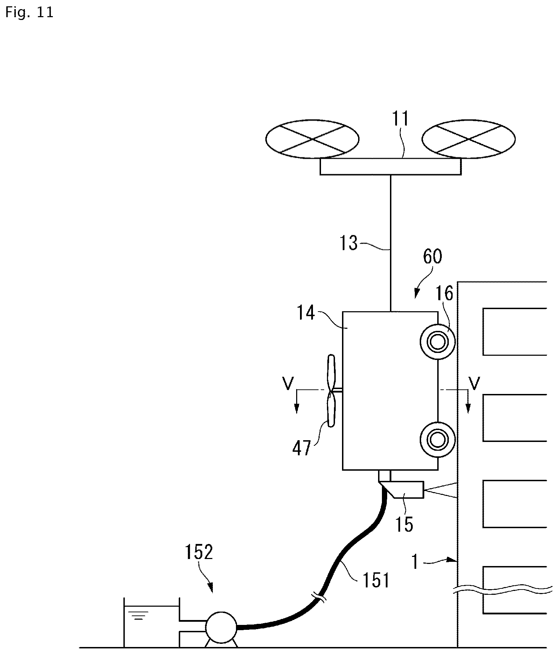

Fig. 11 illustrates an example in which the unit for adjusting the length of the suspension portion is omitted from the above fourth exemplary embodiment. In a mobile work apparatus 60 according to this example, the body 14 is suspended from the flying device 11, which is a support device, using the wire 13, and no winch is provided. Any other configurations of the mobile work apparatus 60 are similar to those of the fourth exemplary embodiment. Even when no winch is provided, suspending the body 14 using the wire 13 makes the reaction force generated by the spraying from the spray nozzle 15 less likely to be transmitted directly to the flying device 11, thereby providing the advantage of stabilizing flight. In addition to this advantage, in the illustrated example, the airflow generated by the fan 47 generates a thrust force that moves the body 14 closer to the target surface 1. The body 14 is thus prevented from moving away from the target surface 1 and a uniform coating film is provided.

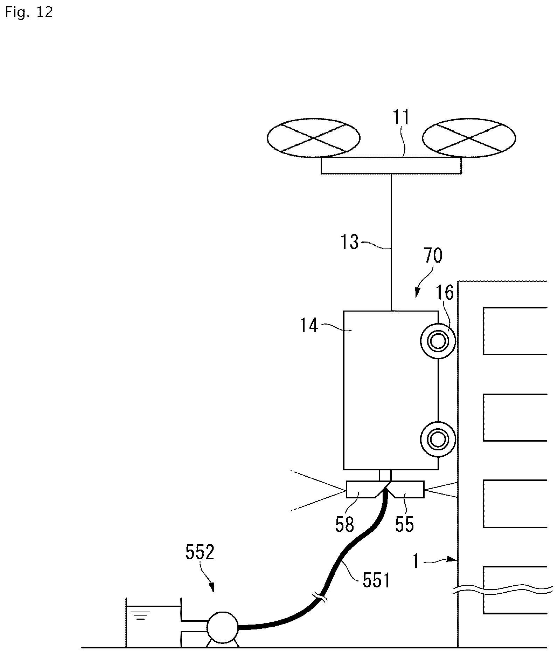

Fig. 12 illustrates an example in which the unit for adjusting the length of the suspension portion is omitted from the above fifth exemplary embodiment. In a mobile work apparatus 70 according to this example, the body 14 is suspended from the flying device 11, which is the support device, using the wire 13, and no winch is provided. Any other configurations of the mobile work apparatus 70 are similar to those of the fifth exemplary embodiment. Even when no winch is provided, suspending the body 14 using the wire 13 makes the reaction force generated by the spraying from the spray nozzle 15 less likely to be transmitted directly to the flying device 11, thereby providing the advantage of stabilizing flight. In addition to this advantage, in the illustrated example, the injection of fluid from the injection nozzle 58 generates a thrust force that moves the body 14 closer to the target surface 1. The body 14 is thus prevented from moving away from the target surface 1 and the surface preparation before painting is stably performed.

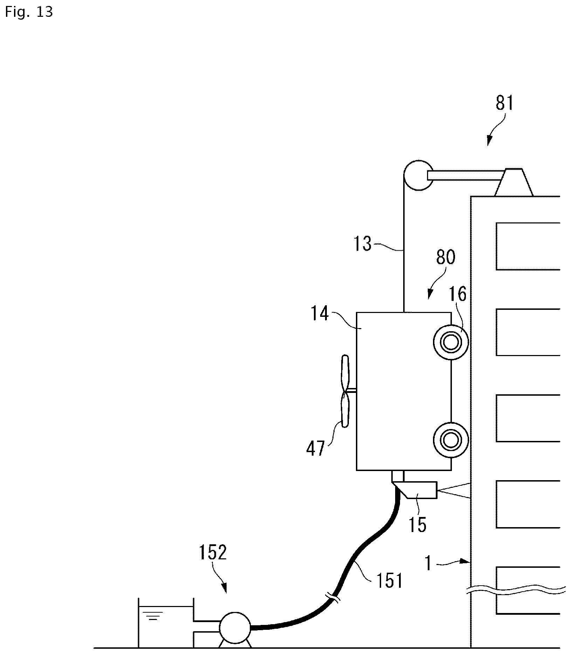

Fig. 13 illustrates a modified example of the example described above with reference to Fig 11. In the illustrated example, the body 14 of a mobile work apparatus 80 is suspended from a hoisting device 81 arranged on an upper end of the target surface 1, specifically on the rooftop of a structure, using the wire 13 configuring the suspension portion. As the hoisting device 81 winds or unwinds the wire 13, the body 14 and the spray nozzle 15 move along the target surface 1 in the vertical direction, making it possible to paint a belt-shaped area of the target surface 1 extending in the vertical direction. When the hoisting device 81 is moved in the horizontal direction on the rooftop of the structure, the body 14 and the spray nozzle 15 also move in the horizontal direction, making it possible to paint, for example, a lateral belt-shaped area of the target surface 1. By repeating the above, the target surface 1 can be painted over a large range. Also in the configuration in which the body 14 is suspended from the hoisting device 81 that is fixed as illustrated in the example of Fig. 13, the problem that the suspended body 14 moves away from the target surface due to the reaction force at the time of spraying is caused similarly as when the body is suspended from the flying device. Thus, the configuration in which the airflow generated by the fan 47 generates the thrust force in the direction in which the body 14 approaches the target surface 1 is effective in the mobile work apparatus 80 as well.

The configuration, in which the mobile work apparatus is suspended from the hoisting device arranged on a structure as illustrated in Fig. 13 instead of using the flying device, can be similarly applied to each of the examples described with reference to Figs. 1 to 12. That is, for example, when the suspension portion includes at least two wires attached to the body at different positions and the units for adjusting the length of the suspension portion synchronously wind or unwind the at least two wires, as illustrated in Fig. 7, the mobile work apparatus may be suspended from the hoisting device placed on a structure rather than the flying device, as illustrated in Fig. 13. Similarly, also when the suspension portion includes the swivel and the wire attached to the body through the swivel as illustrated in Fig. 8, the mobile work apparatus may be suspended from the hoisting device placed on a structure rather than the flying device.

In the above, the examples, in which the coating liquid is sprayed from the spray nozzle 15 attached to the body 14, have mainly been described as the exemplary embodiments of the invention. The invention, however, is not limited thereto. In addition to the example of Fig. 6, a high-pressure water mixed with an abrasive as necessary may be sprayed from the spray nozzle to the target surface for the surface preparation before painting in another example. In still another exemplary mobile work apparatus, a work unit other than the spray nozzle may be attached to the body. For example, the work unit may be an imaging device that images the target surface. Also in this case, the image captured by the imaging device can be accurately associated with information about a position on the target surface, specifically height information by, for example, moving the body and the work unit at a constant speed. Furthermore, for example, the work unit may be a manipulator that performs various works on the target surface, such as drilling, cutting, re-profiling, or screwing. Also in this case, an accurate work position can be quickly reached by, for example, moving the body and the work unit with high position accuracy.

The preferred exemplary embodiments of the invention are described in detail above with reference to the accompanying drawings, but the invention is not limited to these examples. It is clear that a person skilled in the art in the technical field to which the invention pertains can reach various modifications within the scope of the technical idea recited in the claims, and it is understood that these also naturally fall within the technical scope of the invention.

### EXPLANATION OF CODES

10, 10A, 10B, 20, 30, 40, 50...mobile work apparatus, 11...flying device, 12, 12A, 12B, 22...winch, 32...winding device, 13, 13A, 13B, 33...wire, 33A...upper wire, 33B...lower wire, 131...swivel, 14...body, 15, 15A, 15B, 55...spray nozzle, 151, 551...supply tube, 152, 552...supply device, 153A, 153B...angle adjustment mechanism, 16...wheel, 47, 47A, 47B...fan, 58...injection nozzle.

## Claims

1. A mobile work apparatus, comprising:
a flying device;
a suspension portion attached to the flying device;
a body suspended from the flying device using the suspension portion;
a work unit attached to the body; and
a unit configured to adjust a length of the suspension portion, the unit being attached to the flying device, the body, or the suspension portion.

2. The mobile work apparatus according to claim 1, wherein
the suspension portion includes a wire, and
the unit configured to adjust the length of the suspension portion includes a winding device configured to wind and unwind the wire.

3. The mobile work apparatus according to claim 2, wherein
the suspension portion includes at least two wires attached to the body at different positions, and
the unit configured to adjust the length of the suspension portion includes at least two winding devices configured to synchronously wind or unwind the at least two wires.

4. The mobile work apparatus according to any one of claims 1 to 3, wherein the suspension portion includes a swivel and a wire attached to the body through the swivel.

5. The mobile work apparatus according to any one of claims 1 to 4, wherein the work unit includes a plurality of spray nozzles from which fluid is sprayed to a target surface.

6. The mobile work apparatus according to claim 5, wherein
the plurality of spray nozzles are arranged in a horizontal direction, and
the work unit further includes a unit configured to adjust a direction within a horizontal plane in which the fluid is sprayed from each of the spray nozzles.

7. The mobile work apparatus according to claim 5 or 6, wherein
the work unit further includes a unit configured to adjust a direction within a vertical plane in which the fluid is sprayed from each of the spray nozzles.

8. The mobile work apparatus according to any one of claims 1 to 7, wherein the work unit includes a spray nozzle from which fluid is sprayed to a target surface, and
the mobile work apparatus further includes a unit attached to the body and configured to generate a thrust force in a direction in which the body approaches the target surface.

9. The mobile work apparatus according to claim 8, wherein the unit configured to generate the thrust force includes a fan configured to generate an airflow in an opposite direction to the spraying of the fluid from the spray nozzle.

10. The mobile work apparatus according to claim 9, wherein
the fan includes a plurality of fans, and
the plurality of fans are arranged, on a side of the body opposite to the target surface, symmetrically in a horizontal direction.

11. The mobile work apparatus according to claim 8, wherein the unit configured to generate the thrust force includes an injection nozzle from which fluid is sprayed in an opposite direction to the spraying of the fluid from the spray nozzle.

12. The mobile work apparatus according to any one of claims 1 to 11, further comprising a wheel attached to the body at a side close to the target surface.

13. A work method using a mobile work apparatus, the method comprising:
causing a flying device to hover in a vicinity of a target surface;
moving a body of the mobile work apparatus suspended from the flying device using a suspension portion in a vertical direction along the target surface by adjusting a length of the suspension portion, while continuing to hover the flying device;
performing a work on the target surface using a work unit attached to the body in parallel with or alternating with the movement of the body in the vertical direction; and
moving the flying device along the target surface in a horizontal direction and causing the flying device to hover again.
